# EUROPÄISCHE PATENTSCHRIFT

(11) **EP 3 602 106 B1**
(45) Veröffentlichungstag und Bekanntmachung des Hinweises auf die Patenterteilung: **24.09.2025**
(21) Anmeldenummer: 18728351.0
(22) Anmeldetag: 29.05.2018
(51) Int. Cl.: G01S 7/481, B60S 1/56, H01Q 1/42, G01S 7/02, G01S 7/497, G02B 27/00

(54) **GEHÄUSEANORDNUNG UND VORRICHTUNG**
HOUSING ARRANGEMENT AND DEVICE
ENSEMBLE FORMANT BOÎTIER ET DISPOSITIF

(30) Priorität: 29.05.2017 DE 102017111616
(43) Veröffentlichungstag der Anmeldung: 05.02.2020
(73) Patentinhaber: Rheinmetall Electronics GmbH, 28309 Bremen (DE)
(72) Erfinder: FANGMANN, Bernd, 28309 Bremen (DE); NEUBAUER, René, 28309 Bremen (DE); SCHMIDT, Arno, 28309 Bremen (DE)
(74) Vertreter: HKW Intellectual Property PartG mbB
(86) Internationale Anmeldenummer: PCT/EP2018/064025
(87) Internationale Veröffentlichungsnummer: WO 2018/219920

(56) Entgegenhaltungen:
- DE-A1- 102011 003 069
- DE-A1- 102011 003 069
- DE-A1- 102015 111 281
- DE-A1- 102015 111 281
- DE-A1- 102016 006 039
- DE-A1- 102016 006 039
- DE-A1- 3 925 666
- DE-A1- 3 925 666
- DE-C- 717 240
- DE-C- 717 240

## Beschreibung

Die vorliegende Erfindung betrifft eine Gehäuseanordnung für eine erfassende und/oder emittierende Einrichtung und eine erfassende und/oder emittierende Vorrichtung mit einer derartigen Gehäuseanordnung.

Flüssigkeitstropfen und/oder Schmutzpartikel auf einer Erfassungseinrichtung, wie beispielsweise einer Linse einer Kamera oder auf einer Apertur eines höchstfrequenten Radarsensors, können zu einer Störung des erfassten Bildes, wie beispielsweise Artefakte, Unschärfe, unerwünschte Dämpfung oder Linseneffekte, führen. Dieses kann durch Regentropfen, aber auch durch Wassernebel, beispielsweise im maritimen Umfeld oder im Gelände, insbesondere nahe der Straßenoberfläche, auftreten. Üblicherweise werden in diesen Fällen Scheibenwischer eingesetzt, um eine vor der Erfassungseinrichtung positionierte Scheibe permanent zu reinigen.

Bei einem derartigen intermittierenden Betrieb von Scheibenwischern ist jedoch keine kontinuierliche Durchsicht durch die Scheibe zwischen zwei Wischvorgängen gewährleistet. Zudem ist die Mechanik von Scheibenwischern filigran und störanfällig, da sie direkt in der schmutzigen und/oder nassen Umgebung angeordnet ist. Manche technischen Prozesse, wie beispielsweise eine automatische Objektverfolgung, erlauben zudem keine Unterbrechung der Sicht durch Scheibenwischer.

Die DE 10 2011 003 069 A1 zeigt eine Kameraeinheit, die in einem Hohlabschnitt eines elektrischen Motors bereitgestellt ist. Ein Rotor ist drehbar an einem äußeren Umfang eines Stators angeordnet. Ein zylindrisches Motorgehäuse ist an dem Rotor angebracht. Eine Objektivabdeckung ist an dem Motorgehäuse an einer Position einer Vorderseite eines Objektivs der Kameraeinheit angebracht. Die Objektivabdeckung wird zusammen mit dem Motorgehäuse und dem Rotor so in Drehung versetzt, dass eine an einer äußeren Oberfläche der Objektivabdeckung anhaftende Anlagerung durch Zentrifugalkraft entfernt wird.

Die DE 717 240 C beschreibt ein Fenster mit umlaufender Scheibe, die an ihrem Umfang angetrieben und gelagert ist. Das Fenster umfasst einen ringförmigen, die Scheibe umfassenden Elektromotor, dessen an seinem Umfang gelagerter Läuferteil als Träger für die Scheibe ausgebildet ist.

Die DE 10 2015 111 281 A1 zeigt eine Kamera für ein Kraftfahrzeug mit einer Gehäuseanordnung und mit einer Linseneinrichtung, welche zumindest eine Linse umfasst und welche zumindest bereichsweise aus einem elektrisch leitfähigen Material gebildet ist, wobei die Gehäuseanordnung eine Durchgangsöffnung aufweist, in welche die Linseneinrichtung zumindest bereichsweise eingebracht ist.

Vor diesem Hintergrund besteht eine Aufgabe der vorliegenden Erfindung darin, eine verbesserte Gehäuseanordnung für eine erfassende und/oder emittierende Einrichtung zur Verfügung zu stellen.

Gemäß Anspruch 1 wird eine Gehäuseanordnung für eine erfassende und/oder emittierende Einrichtung vorgeschlagen. Die Gehäuseanordnung umfasst ein Gehäuse für die Einrichtung, eine in dem Gehäuse um eine Drehachse drehbar gelagerte Schleuderscheibe, eine Antriebseinrichtung zum Antreiben der Schleuderscheibe, und ein in dem Gehäuse um die Drehachse drehbar gelagertes rohrförmiges Kopplungselement zum Koppeln der Antriebseinrichtung mit der Schleuderscheibe. Dabei ist das Kopplungselement an einem Randbereich der Schleuderscheibe fest mit dieser verbunden, wobei die Antriebseinrichtung dazu eingerichtet ist, das Kopplungselement unmittelbar anzutreiben. Das Kopplungselement ist hierbei innerhalb der Antriebseinrichtung angeordnet.

Dadurch, dass die Schleuderscheibe in dem Gehäuse drehbar gelagert ist und mit Hilfe der Antriebseinrichtung angetrieben werden kann, werden auf der Schleuderscheibe anhaftende Wassertropfen und/oder Schmutzpartikel durch Zentrifugalkräfte radial nach außen weggeschleudert. Ein Scheibenwischer oder Abstreifer ist somit nicht erforderlich. Dadurch, dass das Kopplungselement an einem Randbereich der Schleuderscheibe und nicht im Bereich der Drehachse mit dieser fest verbunden ist, ist ein mittiger Sichtbereich der Schleuderscheibe nicht durch eine mittig vorgesehene Antriebsachse oder Lagerung verdeckt.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer erfassenden und/oder emittierenden Vorrichtung;
Fig. 2 zeigt eine schematische perspektivische Schnittansicht der Vorrichtung gemäß Fig. 1;
Fig. 3 zeigt eine schematische Vorderansicht der Vorrichtung gemäß Fig. 1;
Fig. 4 zeigt eine schematische Schnittansicht der Vorrichtung gemäß der Schnittlinie IV-IV der Fig. 3;
Fig. 5 zeigt die Detailansicht V gemäß Fig. 4;
Fig. 6 zeigt die Detailansicht VI gemäß Fig. 5; und
Fig. 7 zeigt eine schematische Schnittansicht einer Ausführungsform einer Schleuderscheibe für die Vorrichtung gemäß Fig. 1.

In den Figuren sind gleiche oder funktionsgleiche Elemente mit denselben Bezugszeichen versehen worden, sofern nichts anderes angegeben ist.

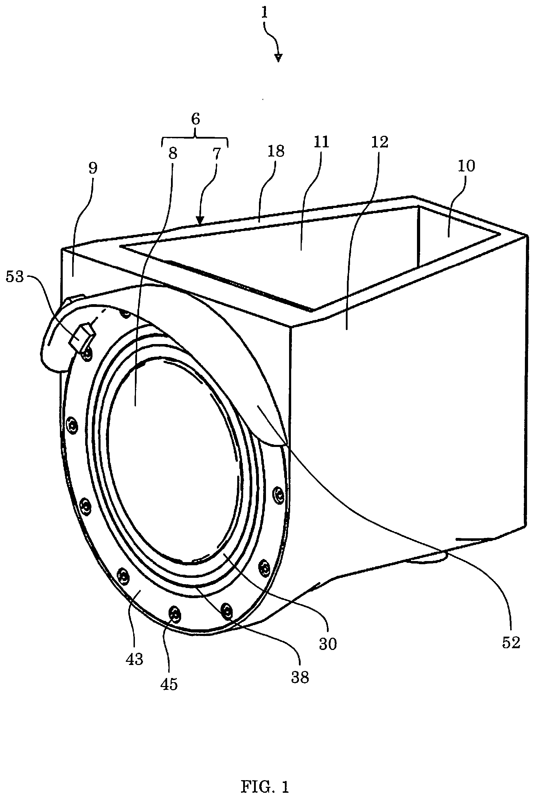

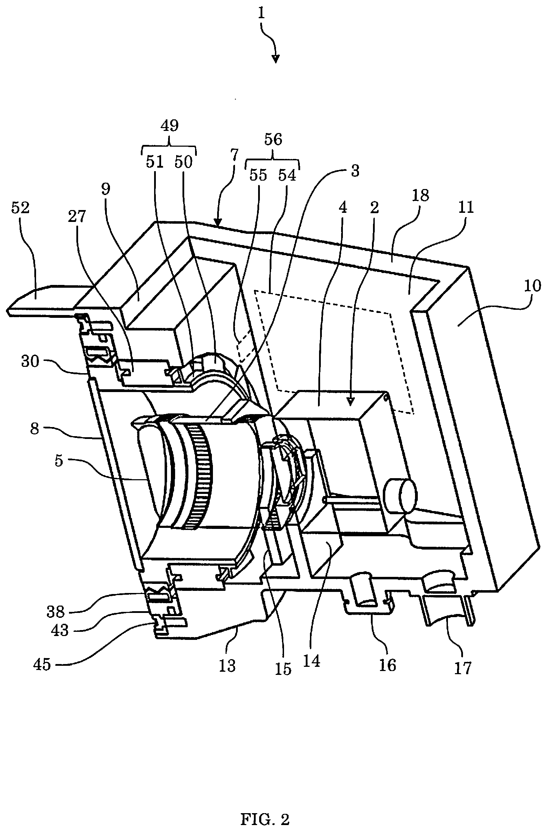

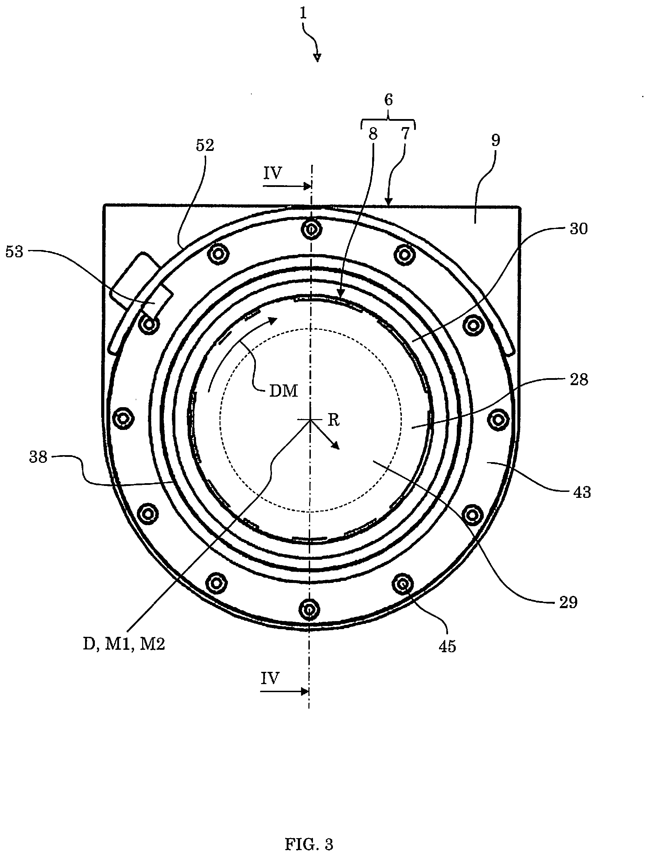

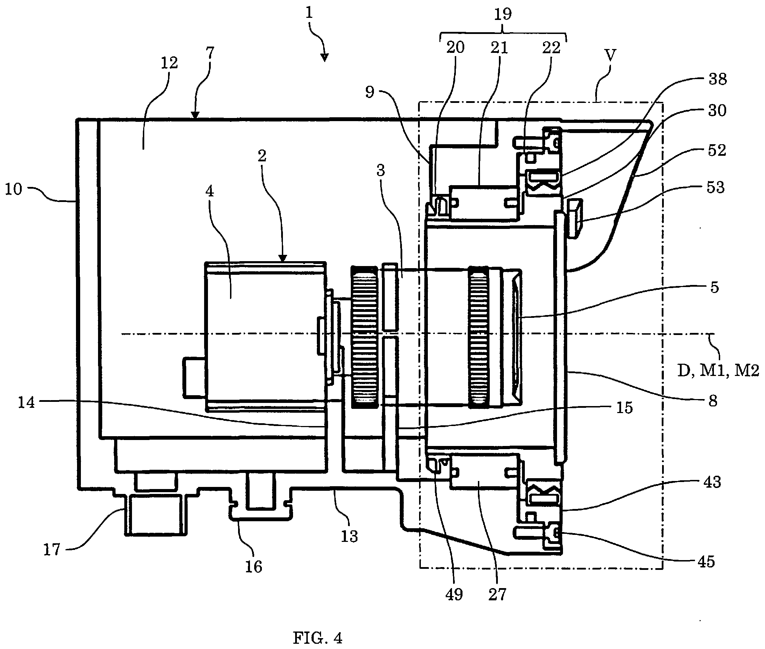

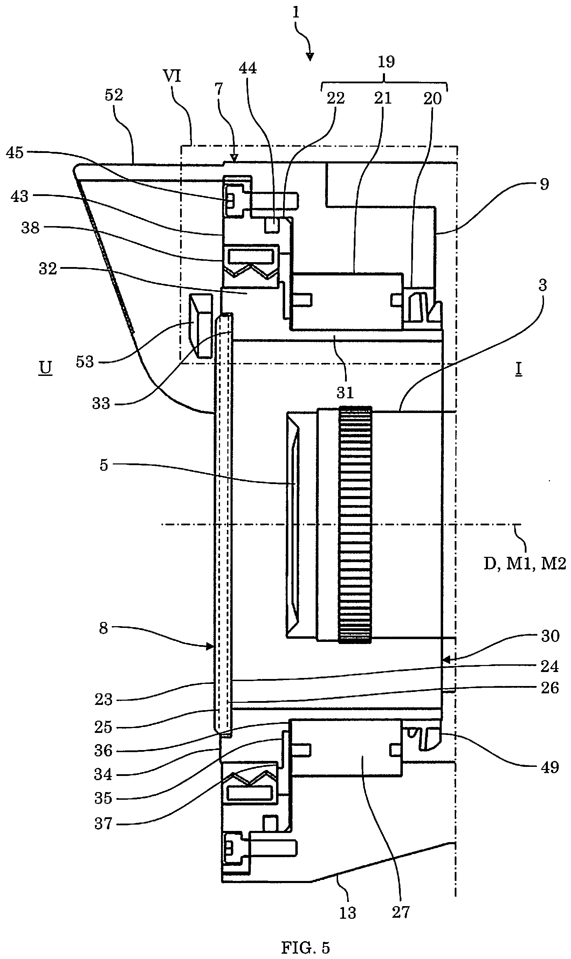

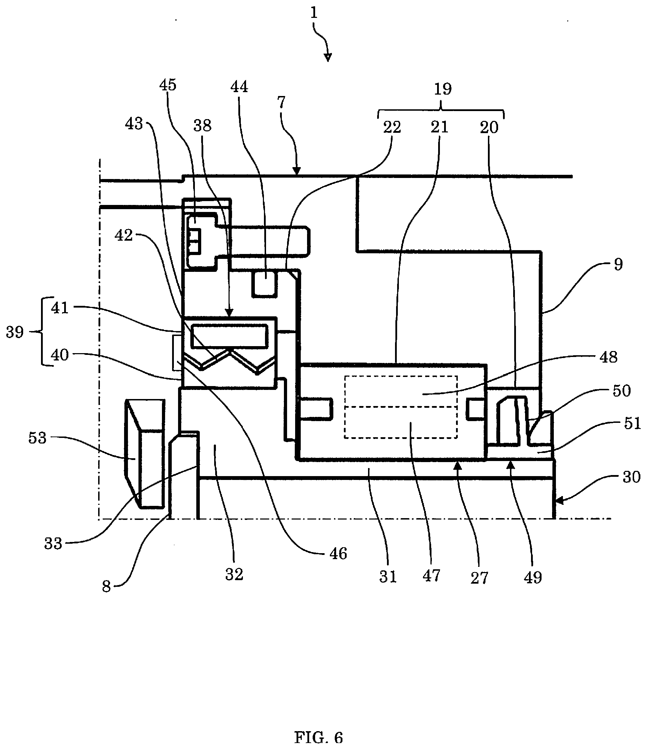

Die Fig. 1 zeigt eine schematische perspektivische Ansicht einer erfassenden und/oder emittierenden Vorrichtung 1, die Fig. 2 zeigt eine schematische perspektivische Schnittansicht der Vorrichtung 1, die Fig. 3 zeigt eine schematische Vorderansicht der Vorrichtung 1, die Fig. 4 zeigt eine schematische Schnittansicht der Vorrichtung 1 gemäß der Schnittlinie IV-IV der Fig. 3, die Fig. 5 zeigt die Detailansicht V gemäß der Fig. 4, und die Fig. 6 zeigt die Detailansicht VI gemäß der Fig. 5. Im Folgenden wird auf die Fig. 1 bis 6 gleichzeitig Bezug genommen.

Die erfassende und/oder emittierende Vorrichtung 1 ist insbesondere dazu eingerichtet, elektromagnetische Strahlung zu erfassen und/oder zu emittieren. Daher kann die erfassende und/oder emittierende Vorrichtung 1 auch als elektromagnetische Strahlung erfassende und/oder emittierende Vorrichtung 1 bezeichnet werden. Beispiele für elektromagnetische Strahlung sind Radiowellen, Mikrowellen, Wärmestrahlung, Licht, Röntgenstrahlung und Gammastrahlung. Nachfolgend wird die erfassende und/oder emittierende Vorrichtung 1 jedoch nur als Vorrichtung 1 bezeichnet.

Die Vorrichtung 1 umfasst hierbei eine erfassende und/oder emittierende Einrichtung 2, die dazu eingerichtet ist, elektromagnetische Strahlung zu erfassen und/oder zu emittieren. Daher kann die erfassende und/oder emittierende Einrichtung 2 auch als elektromagnetische Strahlung erfassende und/oder emittierende Einrichtung 2 bezeichnet werden. Nachfolgend wird die erfassende und/oder emittierende Einrichtung 2 jedoch nur als Einrichtung 2 bezeichnet. Die Einrichtung 2 ist Teil der Vorrichtung 1. Die Vorrichtung 1 kann mehrere Einrichtungen 2 umfassen. Die Einrichtung 2 ist beliebig austauschbar.

Die Einrichtung 2 kann beispielsweise ein beliebiger Sensor sein, der dazu eingerichtet ist, Signale, insbesondere in Form elektromagnetischer Strahlung, zu erfassen. Insbesondere ist die Einrichtung 2 eine bildgebende Einrichtung 2, wie beispielsweise eine Kamera. In diesem Fall ist die Einrichtung 2 eine rein erfassende Einrichtung 2. Die Einrichtung 2 kann dann beispielsweise ein Objektiv 3 und ein Kameragehäuse 4 umfassen. Das Objektiv 3 kann eine Linse 5 umfassen. Alternativ kann die Einrichtung 2 beispielsweise auch ein Radarsensor oder dergleichen sein. Die Einrichtung 2 kann auch ein Laserscanner sein. In diesem Fall ist die Einrichtung 2 eine erfassende und emittierende Einrichtung 2. Die Einrichtung 2 kann auch eine Lichtquelle, insbesondere ein Scheinwerfer, sein.

Die Vorrichtung 1 ist dazu eingerichtet, auf oder an Fahrzeugen, wie beispielsweise Luftfahrzeugen, Landfahrzeugen oder Wasserfahrzeugen, eingesetzt zu werden. Weiterhin kann die Vorrichtung 1 auch für immobile Anwendungen, beispielsweise für Bohrinseln, Bearbeitungscenter, Fräsmaschinen, Produktionsstraßen oder dergleichen eingesetzt werden. Insbesondere eignet sich die Vorrichtung 1 für einen Außeneinsatz in sehr schmutziger und/oder nasser Umgebung, wie beispielsweise auf oder an Geländefahrzeugen oder Seeschiffen, oder schwer zugänglichen Einbauorten, wie beispielsweise Mast- oder Turmmontagen.

Die Vorrichtung 1 umfasst neben der Einrichtung 2 eine Gehäuseanordnung 6. Die Gehäuseanordnung 6 umfasst ein Gehäuse 7, in dem die Einrichtung 2 aufgenommen ist, und eine in dem Gehäuse 7 um eine Drehachse D drehbar gelagerte Schleuderscheibe 8. Die Schleuderscheibe 8 kann auch als Scheibe, Klarsichtscheibe oder Kent-Scheibe bezeichnet werden.

Das Gehäuse 7 umfasst eine Vorderwand 9, eine beabstandet von der Vorderwand 9 und vorzugsweise parallel zu dieser angeordnete Rückwand 10, eine erste Seitenwand 11 sowie eine beabstandet von der ersten Seitenwand 11 angeordnete zweite Seitenwand 12. Die Seitenwände 11, 12 können dabei V-förmig oder auch parallel zueinander angeordnet sein. Das Gehäuse 7 umfasst weiterhin einen Boden 13, aus dem sich in Richtung der Einrichtung 2 erstreckende Halter 14, 15 erstrecken. Die Halter 14, 15 tragen die Einrichtung 2, insbesondere das Kameragehäuse 4 und das Objektiv 3.

An dem Boden 13 kann ferner ein Anschlussstutzen 16 vorgesehen sein, mit dessen Hilfe das Gehäuse 7 mit einem Überdruck beaufschlagbar ist. Ferner kann an dem Boden 13 auch eine Kabeldurchführung 17 vorgesehen sein, durch die elektrische Leitungen in das Gehäuse 7 eingeführt sein können. Das Gehäuse 7 kann weiterhin einen nicht gezeigten Deckel umfassen, der auf einer Oberkante 18 des Gehäuses 7 aufgelegt und wasserdicht mit dieser verbunden ist. Das Gehäuse 7 kann beispielsweise aus einem Metall, beispielsweise aus einer Aluminiumlegierung oder einer Stahllegierung, einem Kunststoff und/oder einem Verbundwerkstoff gefertigt sein. Die Materialien können auch kombiniert werden.

Das Gehäuse 7 kann, wie zuvor erläutert, kastenförmig ausgestaltet und dazu eingerichtet sein, die Einrichtung 2 aufzunehmen. In diesem Fall ist die Einrichtung 2 innerhalb, insbesondere vollständig innerhalb, des Gehäuses 7 anordenbar. Das Gehäuse 7 kann auch topfförmig sein. In diesem Fall kann das Gehäuse 7 eine umlaufende zylindrische Wandung aufweisen. Das Gehäuse 7 muss jedoch nicht zwingend dazu geeignet sein, die Einrichtung 2 aufzunehmen. Das Gehäuse 7 kann auch direkt an die Einrichtung 2 angeflanscht sein. In diesem Fall kann das Gehäuse 7 beispielsweise ringförmig, plattenförmig oder flanschförmig sein. Das Gehäuse 7 kann dann beispielsweise nur die plattenförmige Vorderwand 9 umfassen. Die Einrichtung 2 ist somit zumindest abschnittsweise oder vollständig außerhalb des Gehäuses 7 anordenbar. Die Gehäuseanordnung 6 kann dadurch, beispielsweise als Nachrüstteil, direkt an der Einrichtung 2 montiert werden.

Das Gehäuse 7 kann auch die Vorderwand 9 und abschnittsweise die Seitenwände 11, 12 und den Boden 13 jedoch keine Rückwand 10 umfassen. Das heißt, die Seitenwände 11, 12 und der Boden 13 sind in diesem Fall abgeschnitten. Das Gehäuse 7 kann auch modular aufgebaut sein, wobei die Schleuderscheibe 8 dann in einem ersten Gehäuseabschnitt und die Einrichtung 2 in einem mit dem ersten Gehäuseabschnitt verbindbaren oder an diesem anflanschbaren zweiten Gehäuseabschnitt aufnehmbar ist.

In der Vorderwand 9 ist ein mehrstufiger Durchbruch oder eine mehrstufige Bohrung 19 vorgesehen, die rotationssymmetrisch zu der Drehachse D aufgebaut ist. Die Bohrung 19 weist einen ersten Abschnitt 20, einen benachbart zu dem ersten Abschnitt 20 angeordneten zweiten Abschnitt 21 und einen benachbart zu dem zweiten Abschnitt 21 angeordneten dritten Abschnitt 22 auf. Der zweite Abschnitt 21 ist dabei zwischen dem ersten Abschnitt 20 und dem dritten Abschnitt 22 positioniert. Ein Durchmesser des zweiten Abschnitts 21 ist dabei größer als ein Durchmesser des ersten Abschnitts 20, und ein Durchmesser des dritten Abschnitts 22 ist größer als der Durchmesser des zweiten Abschnitts 21. Hierdurch ergibt sich eine gestufte Geometrie der Bohrung 19. Die Abschnitte 20 bis 22 sind jeweils kreiszylinderförmig ausgestaltet und rotationssymmetrisch zu der Drehachse D aufgebaut. Die Einrichtung 2, insbesondere das Objektiv 3 der Einrichtung 2, kann zumindest teilweise innerhalb der Bohrung 19 angeordnet sein.

Wie zuvor erwähnt, umfasst die Gehäuseanordnung 6 die in dem Gehäuse 7 aufgenommene Schleuderscheibe 8. Die Schleuderscheibe 8 weist vorzugsweise eine kreisrunde Geometrie auf, die rotationssymmetrisch zu der Drehachse D ausgebildet ist. Das heißt, die Drehachse D ist gleichzeitig eine Mittel- oder Symmetrieachse der Schleuderscheibe 8 und der Bohrung 19. Die Schleuderscheibe 8 ist dazu eingerichtet, sich mit einer hohen Drehzahl von beispielsweise 6.000 bis 15.000 Umdrehungen/Minute oder mehr um die Drehachse D zu drehen. Dadurch, dass sich die Schleuderscheibe 8 um die Drehachse D dreht, werden durch die wirkende Fliehkraft Treibstoffe, Öle, Spritzwasser, Schmutzpartikel, wie Sand oder Salz, Regentropfen und dergleichen in einer Radialrichtung R (Fig. 3) der Schleuderscheibe 8 nach außen weggeschleudert, wodurch die Schleuderscheibe 8 im Betrieb derselben stets frei von Flüssigkeiten und/oder Schmutzpartikeln ist.

Die Schleuderscheibe 8 weist, wie in der Fig. 5 gezeigt, eine einer Umgebung U des Gehäuses 7 zugewandte und einem Innenraum I des Gehäuses 7 abgewandte Außenseite 23 sowie eine der Umgebung U abgewandte und dem Innenraum I zugewandte Innenseite 24 auf. Die Außenseite 23 kann mit einer ersten Beschichtung 25 und die Innenseite 24 kann mit einer zweiten Beschichtung 26 beschichtet sein. Die erste Beschichtung 25 ist vorzugsweise hydrophil. Hydrophilie bedeutet wasserliebend, was besagt, dass ein Stoff stark mit Wasser wechselwirkt. Beispielsweise kann die erste Beschichtung 25 eine Titandioxid-Beschichtung (TiO₂-Beschichtung) sein. In diesem Fall lässt die erste Beschichtung 25 polare Flüssigkeiten, wie Wasser, leicht spreiten und/oder abfließen. Das heißt, es bildet sich ein die Sicht durch die Schleuderscheibe 8 nicht behindernder dünner Wasserfilm aus. Alternativ kann die erste Beschichtung 25 beispielsweise eine hydrophobe, das heißt, wassermeidende, Nanobeschichtung sein, die Flüssigkeiten und/oder Schmutzpartikel nicht anheften lässt.

Die an der Innenseite 24 vorgesehene zweite Beschichtung 26 kann beispielsweise eine abschirmende Indiumzinnoxid-Beschichtung (ITO-Beschichtung) sein. Indiumzinnoxid ist ein halbleitender, im sichtbaren Licht weitgehend transparenter Stoff. Alternativ kann die zweite Beschichtung 26 auch eine antireflektierende Beschichtung oder eine Kombination aus einer antireflektierenden Beschichtung und einer ITO-Beschichtung sein. Im Falle einer sogenannten EMV-Abschirmung (elektromagnetische Verträglichkeit) mit Hilfe einer ITO-Beschichtung kann die Schleuderscheibe 8 mit dem Gehäuse 7 leitend verbunden sein. Hierzu kann beispielsweise ein Schleifkontakt vorgesehen sein.

Die Schleuderscheibe 8 ist vorzugsweise aus Glas oder einem Kunststoff, wie beispielsweise Polycarbonat (PC), gefertigt. Die Schleuderscheibe 8 kann auch aus einem Verbundglas gefertigt sein. Die Schleuderscheibe 8 ist transparent. Insbesondere ist die Schleuderscheibe 8 in einem für die Funktion der Einrichtung 2 relevanten elektromagnetischen Spektrum transparent. Das heißt, die Schleuderscheibe 8 kann für sichtbares Licht intransparent sein. Die Schleuderscheibe 8 ist bevorzugt materialeinstückig ausgebildet. Die Schleuderscheibe 8 ist vorzugsweise eben oder plan. Die Schleuderscheibe 8 kann je nach Anwendungsfall und/oder Art der verwendeten Einrichtung 2 auch gewölbt, insbesondere konkav oder konvex gewölbt, sein.

Die Gehäuseanordnung 6 umfasst weiterhin eine Antriebseinrichtung 27, die in dem Gehäuse 7 aufgenommen ist. Die Antriebseinrichtung 27 ist dazu eingerichtet, die Schleuderscheibe 8 anzutreiben, um diese um die Drehachse D zu rotieren. Hierzu bringt die Antriebseinrichtung 27 ein Antriebsmoment oder Drehmoment DM (Fig. 3) auf die Schleuderscheibe 8 auf. Das Drehmoment DM kann, wie in der Fig. 3 gezeigt, im Uhrzeigersinn, oder alternativ auch entgegen dem Uhrzeigersinn, orientiert sein. Das heißt, die Schleuderscheibe 8 kann sich im Betrieb der Antriebseinrichtung 27 im Uhrzeigersinn oder entgegen dem Uhrzeigersinn drehen. Die Antriebseinrichtung 27 kann dazu eingerichtet sein, die Drehrichtung der Schleuderscheibe 8 umzudrehen.

Die Antriebseinrichtung 27 ist dabei so mit der Schleuderscheibe 8 gekoppelt, dass das Drehmoment DM in der Radialrichtung R betrachtet beabstandet von der Drehachse D auf die Schleuderscheibe 8 übertragen wird. Das heißt, das Drehmoment DM wird nicht in der Mitte der Schleuderscheibe 8, das heißt, an der Drehachse D, sondern an einem Randbereich 28 auf die Schleuderscheibe 8 übertragen. Die Schleuderscheibe 8 ist so in einen Sichtbereich 29, hinter dem die Einrichtung 2, insbesondere die Linse 5 des Objektivs 3, angeordnet ist, und in den Randbereich 28 unterteilt, der ringförmig um den Sichtbereich 29 umläuft. Der Sichtbereich 29 ist scheibenförmig und rotationssymmetrisch zu der Drehachse D aufgebaut. Der Randbereich 28 kann intransparent sein. Der Sichtbereich 29 ist jedoch zumindest in dem für die Einrichtung 2 relevanten elektromagnetischen Spektrum transparent.

Zum Aufbringen des Drehmoments DM von der Antriebseinrichtung 27 auf die Schleuderscheibe 8 ist ein Kopplungselement 30 zur Drehmomentübertragung vorgesehen. Das Kopplungselement 30 ist rohrförmig. Das Kopplungselement 30 kann auch als Tubus oder Kopplungstubus bezeichnet werden. Das Kopplungselement 30 umfasst, wie in den Fig. 5 und 6 gezeigt, eine zylindrische Wandung 31, die rotationssymmetrisch zu einer Mittel- oder Symmetrieachse M1 ausgebildet ist. Die Symmetrieachse M1 kann mit der Drehachse D der Schleuderscheibe 8 übereinstimmen. Zumindest sind die Symmetrieachse M1 und die Drehachse D koaxial. Das Kopplungselement 30 kann aus einem Metall, einem Kunststoff oder einem Verbundwerkstoff gefertigt sein.

Das Kopplungselement 30 umfasst weiterhin einen materialeinstückig mit der Wandung 31 ausgebildeten ringförmigen Befestigungsabschnitt 32, der ebenfalls rotationssymmetrisch zu der Symmetrieachse M1 ausgebildet ist. Der Befestigungsabschnitt 32 umfasst eine ringförmige Stirnfläche 33, mit der die Schleuderscheibe 8, und insbesondere der Randbereich 28 der Schleuderscheibe 8, fest verbunden ist. Über die Stirnfläche 33 und den Randbereich 28 wird das Drehmoment DM von dem Kopplungselement 30 auf die Schleuderscheibe 8 übertragen. Beispielsweise ist die Stirnfläche 33 mit dem Randbereich 28 stoffschlüssig verbunden, insbesondere verklebt, oder verklemmt. Die Stirnfläche 33 ist gegenüber einer Vorderseite 34 des Befestigungsabschnitts 32 zurückgesetzt.

Der Vorderseite 34 abgewandt umfasst der Befestigungsabschnitts 32 weiterhin eine Rückseite 35, die der Antriebseinrichtung 27 zugewandt ist. Parallel und beabstandet von der Rückseite 35 ist ein Absatz 36 an dem Befestigungsabschnitt 32 vorgesehen. An dem Absatz 36 kann die Antriebseinrichtung 27 anliegen. Der Befestigungsabschnitt 32 umfasst weiterhin einen parallel zu und beabstandet von der Vorderseite 34 vorgesehenen Absatz 37.

Das Kopplungselement 30 mitsamt der Schleuderscheibe 8 ist mit Hilfe einer Dichteinrichtung 38 gegenüber dem Gehäuse 7 abgedichtet. Die Dichteinrichtung 38 umfasst, wie in der Fig. 6 gezeigt, eine Spaltdichtung oder Labyrinthdichtung 39, die rotationssymmetrisch zu der Symmetrieachse M1 aufgebaut ist. Die Labyrinthdichtung 39 umfasst ein erstes Dichtelement 40, das drehfest mit dem Befestigungsabschnitt 32 des Kopplungselements 30 verbunden ist. Beispielsweise liegt das erste Dichtelement 40 an dem Absatz 37 des Befestigungsabschnitts 32 an.

Die Labyrinthdichtung 39 umfasst weiterhin ein zweites Dichtelement 41, das vorzugsweise ebenfalls rotationssymmetrisch zu der Symmetrieachse M1 ausgebildet ist, und das drehfest mit dem Gehäuse 7 verbunden ist. Zwischen dem ersten Dichtelement 40 und dem zweiten Dichtelement 41 ist ein Spalt 42 vorgesehen, der labyrinthförmig oder mäanderförmig ausgebildet ist. Dadurch, dass zwischen dem ersten Dichtelement 40 und dem zweiten Dichtelement 41 der Spalt 42 vorgesehen ist, berühren sich die Dichtelemente 40, 41 nicht. Hierdurch erzeugt die Labyrinthdichtung 39 im Betrieb der Antriebseinrichtung 27 keine Reibung.

Das zweite Dichtelement 41 ist in einem Aufnahmering 43 aufgenommen, der mit Hilfe eines Dichtelements 44, insbesondere eines O-Rings, gegenüber dem dritten Abschnitt 22 der Bohrung 19 abgedichtet ist. Hierzu kann in dem Aufnahmering 43 eine Nut für das Dichtelement 44 vorgesehen sein. Der im Querschnitt stufenförmige Aufnahmering 43 ist zumindest abschnittsweise in dem dritten Abschnitt 22 der Bohrung 19 aufgenommen. Der Aufnahmering 43 ist rotationssymmetrisch zu der Symmetrieachse M1 aufgebaut. Der Aufnahmering 43 ist mit einer Vielzahl an Befestigungselementen 45, insbesondere Zylinderschrauben, mit der Vorderwand 9 des Gehäuses 7 verschraubt.

Die Dichteinrichtung 38 umfasst weiterhin eine an der Labyrinthdichtung 39 vorgesehene Dichtlippe 46, die ringförmig und rotationssymmetrisch zu der Symmetrieachse M1 ausgebildet ist. Die Dichtlippe 46 deckt den Spalt 42 der Labyrinthdichtung 39 zu der Umgebung U hin ab. Für den Fall, dass der Innenraum I gegenüber der Umgebung U druckbeaufschlagt wird, strömt durch den Spalt 42 Luft oder Gas nach außen in die Umgebung U und hebt die Dichtlippe 46 an. Somit wird bei einem Rotieren der Schleuderscheibe 8 verhindert, dass die Dichtlippe 46 Reibung erzeugt. Die Dichtlippe 46 kann dabei fest mit dem ersten Dichtelement 40 oder fest mit dem zweiten Dichtelement 41 verbunden sein. Vorzugsweise ist die Dichtlippe 46 an dem zweiten Dichtelement 41 befestigt. Die Dichtlippe 46 ist aus einem flexiblen Material, beispielsweise aus Silikon, gefertigt.

Die Antriebseinrichtung 27 ist dazu eingerichtet, das Kopplungselement 30 und somit die Schleuderscheibe 8 direkt anzutreiben. Das heißt, die Antriebseinrichtung 27 ist nicht mit Hilfe eines Getriebes, Zahnriemens oder dergleichen mit dem Kopplungselement 30 gekoppelt. Mit anderen Worten ist die Kopplung zwischen der Antriebseinrichtung 27 und dem Kopplungselement 30 getriebefrei und/oder übersetzungsfrei. Die Antriebseinrichtung 27 ist ringförmig ausgebildet und ist vorzugsweise rotationssymmetrisch zu einer Mittel- oder Symmetrieachse M2 ausgebildet. Die Symmetrieachse M2 fällt mit der Drehachse D und der Symmetrieachse M1 zusammen. Insbesondere sind die Drehachse D und die Symmetrieachsen M1, M2 koaxial positioniert. Das heißt, die Schleuderscheibe 8, das Kopplungselement 30 und die Antriebseinrichtung 27 sind koaxial zueinander positioniert und jeweils rotationssymmetrisch aufgebaut.

Die Antriebseinrichtung 27 ist in dem zweiten Abschnitt 21 der Bohrung 19 aufgenommen, wobei die Antriebseinrichtung 27 in der Radialrichtung R betrachtet zwischen dem zweiten Abschnitt 21 und der Wandung 31 des Kopplungselements 30 angeordnet ist. Die Antriebseinrichtung 27 überträgt das Drehmoment DM direkt auf die Wandung 31 und somit direkt auf das Kopplungselement 30. Die Antriebseinrichtung 27 ist dabei außenseitig an der Wandung 31 positioniert. In einer nicht gezeigten Ausführungsform der Gehäuseanordnung 6 kann die Antriebseinrichtung 27 jedoch auch innenseitig an der Wandung 31 positioniert sein.

Die Antriebseinrichtung 27 umfasst, wie in der Fig. 6 gezeigt, ein Antriebselement 47. Das Antriebselement 47 ist vorzugsweise ein Elektromotor, insbesondere ein bürstenloser Induktionsmotor. Die Antriebseinrichtung 27 umfasst weiterhin zumindest ein Lagerelement 48, das zum einen zur Lagerung des Antriebselements 47 als auch zur Lagerung des Kopplungselements 30 in dem Gehäuse 7 geeignet ist. Das Lagerelement 48 ist vorzugsweise ein Magnetlager oder Luftkissenlager. Das Lagerelement 48 kann allerdings auch ein Wälzlager, wie beispielsweise ein Kugellager, ein Rollenlager oder ein Kegellager, sein. Insbesondere ist das Lagerelement 48 schmierungsfrei. Das Lagerelement 48 kann beispielsweise keramische Wälzkörper aufweisen.

Vorzugsweise bildet das Lagerelement 48 gleichzeitig ein Motorlager des Antriebselements 47 und die Lagerung für das Kopplungselement 30 in dem Gehäuse 7. Das Antriebselement 47 und das Lagerelement 48 sind vorzugsweise beide rotationssymmetrisch zu der Symmetrieachse M2 der Antriebseinrichtung 27 ausgebildet. Die Antriebseinrichtung 27 ist dazu eingerichtet, das Kopplungselement 30 außenseitig, das heißt, der Bohrung 19 zugewandt, umfänglich anzutreiben. Alternativ kann die Antriebseinrichtung 27, wie zuvor schon erwähnt, auch innerhalb des Kopplungselements 30 angeordnet sein und dieses von innen antreiben. In diesem Fall ist außenseitig an dem Kopplungselement 30 ein zusätzliches Lagerelement vorgesehen. Vorzugsweise ist das Kopplungselement 30 ein Rotor der Antriebseinrichtung 27, insbesondere des Antriebselements 47.

Die Gehäuseanordnung 6 umfasst ferner einen Verdichter 49 (Fig. 6), der dazu eingerichtet ist, den Spalt 42 mit Druck zu beaufschlagen und die Dichtlippe 46 von dem Spalt 42 abzuheben. Der Verdichter 49 umfasst eine Vielzahl an Verdichterschaufeln 50, die an einem ringförmigen Befestigungsabschnitt 51 befestigt sind. Der ringförmige Befestigungsabschnitt 51 ist außenseitig an der Wandung 31 des Kopplungselements 30 befestigt. Die Antriebseinrichtung 27 ist dann zwischen dem Befestigungsabschnitt 32 des Kopplungselements 30 und dem Verdichter 49 positioniert. Der Verdichter 49 ist bevorzugt einteilig, insbesondere materialeinstückig, ausgebildet und rotationssymmetrisch zu den Symmetrieachsen M1, M2 aufgebaut. Der Verdichter 49 kann aus einem Metall, einem Kunststoff oder einem Verbundwerkstoff gefertigt sein.

An der Vorderwand 9 des Gehäuses ist ferner ein Blendenelement 52 vorgesehen. Das Blendenelement 52 dient beispielsweise als Sonnenschutz und/oder Schwallschutz.

Das Gehäuse 7 kann mit an der Vorderwand 9, der Rückwand 10 und/oder den Seitenwänden 11, 12 vorgesehenen optionalen Flächenheizungselementen 54 (Fig. 2) beheizt sein. Die Flächenheizungselemente 54 sind mattenförmig und können an beliebiger Stelle innenseitig an dem Gehäuse 7 angebracht sein. Alternativ zu den Flächenheizungselementen 54 können elektrische Heizwiderstände vorgesehen sein. Die Schleuderscheibe 8 kann ferner beispielsweise mit Hilfe durch den Spalt 42 der Labyrinthdichtung 39 hindurchtretender warmer Luft erhitzt werden. Weiterhin kann auch die Abwärme der Antriebseinrichtung 27 die Schleuderscheibe 8 erhitzen.

Ferner kann zum Erwärmen der Schleuderscheibe 8 auch ein Wirbelstromheizungselement 55 (Fig. 2) vorgesehen sein. Die Flächenheizungselemente 54 und das Wirbelstromheizungselement 55 können Teil einer Heizeinrichtung 56 der Gehäuseanordnung 6 sein. Das Wirbelstromheizungselement 55 kann ein an dem Gehäuse 7 befestigter feststehender Magnet sein. Das Wirbelstromheizungselement 55 erwärmt in diesem Fall auch das Kopplungselement 30, das dann vorzugsweise aus einem elektrisch gut leitenden Material ist. Wenn das Kopplungselement 30 gegenüber dem Wirbelstromheizungselement 55 rotiert, wird in dem Kopplungselement 30 durch die dabei entstehenden Wirbelströme Verlustwärme erzeugt, die direkt das Kopplungselement 30 erwärmt. Die Schleuderscheibe 8 kann dann über Wärmeleitung von dem Kopplungselement 30 erwärmt werden. Alternativ kann die Schleuderscheibe 8 auch induktiv oder ohmsch mit Hilfe von Schleifkontakten oder dergleichen erwärmt werden.

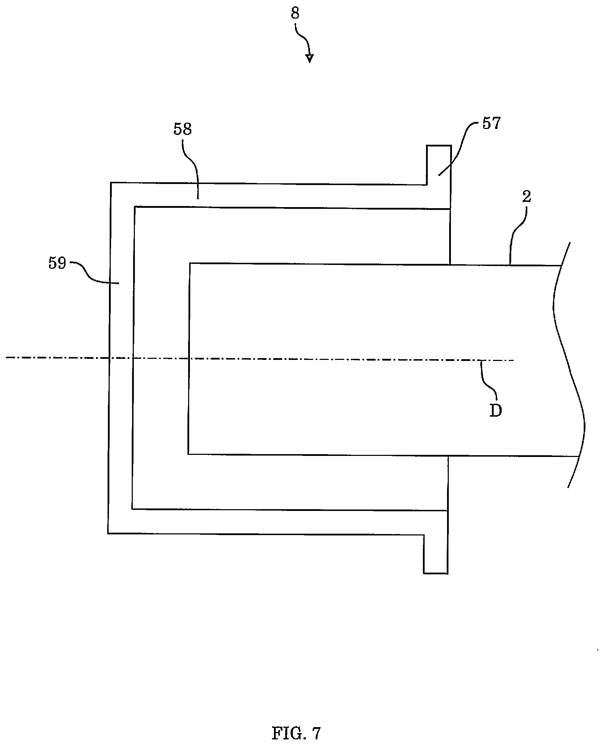

Die Fig. 7 zeigt eine Schnittansicht einer Weiterbildung der Schleuderscheibe 8. Die Ausführungsform der Schleuderscheibe 8 gemäß der Fig. 7 unterscheidet sich von der Ausführungsform der zuvor erläuterten Schleuderscheibe 8 dadurch, dass diese nicht plan oder eben sondern topfförmig ist.

Die Schleuderscheibe 8 umfasst einen zu der Drehachse D rotationssymmetrischen Befestigungsabschnitt 57, der ringförmig ist, und der mit dem Befestigungsabschnitt 32 des Kopplungselements 30 fest verbunden ist. Die Schleuderscheibe 8 umfasst weiterhin einen rohrförmigen Wandabschnitt 58, der rotationssymmetrisch zu der Drehachse D ausgebildet ist. Der Wandabschnitt 58 kann kreiszylinderförmig oder kegelstumpfförmig ausgebildet sein. Die Schleuderscheibe 8 umfasst weiterhin einen Bodenabschnitt 59, der die Schleuderscheibe 8 stirnseitig abschließt. Bei dieser Ausgestaltung der Schleuderscheibe 8 kann sich die Einrichtung 2 aus dem Gehäuse 7 heraus bis in den Wandabschnitt 58 hineinerstrecken. In diesem Fall kann die Einrichtung 2 beispielsweise als Laserscanner ausgebildet sein.

Die Einrichtung 2 kann ferner innerhalb des Gehäuses 7 in einem weiteren, nicht gezeigten, Gehäuse eingekapselt sein. Hierdurch kann die Einrichtung 2 mit einem Schutzgas oder Inertgas, wie beispielsweise Stickstoff, geflutet werden.

Die Funktionalität der Gehäuseanordnung 6 wird nachfolgend nochmals zusammenfassend erläutert. Im Stillstand der Schleuderscheibe 8 liegt die Dichtlippe 46 an der Labyrinthdichtung 39 an, wodurch der Spalt 42 abgedichtet ist. Hierdurch kann im Stillstand der Schleuderscheibe 8 keine Flüssigkeit und/oder Schmutzpartikel in das Gehäuse 7 eindringen. Sobald die Antriebseinrichtung 27 das Kopplungselement 30 antreibt, rotiert die Schleuderscheibe 8 um die Drehachse D. Die Schleuderscheibe 8 kann dabei, wie zuvor schon erwähnt, eine Drehzahl von etwa 6.000 bis 15.000 Umdrehungen/Minute erreichen.

Durch die Druckbeaufschlagung des Spalts 42 der Labyrinthdichtung 39 mit Hilfe des Verdichters 49 oder der Druckbeaufschlagung des gesamten Innenraums I mit Hilfe einer externen Druckversorgung wird der Spalt 42 mit einem Überdruck beaufschlagt, wodurch die Dichtlippe 46 von der Labyrinthdichtung 39 abgehoben wird. Hierdurch strömt konstant Luft von dem Innenraum I über den Spalt 42 in die Umgebung U, wodurch die Dichtlippe 46 verformt wird. Im druckbeaufschlagten Zustand wird die Dichtlippe 46 geweitet und verliert somit den Kontakt zu dem ersten Dichtelement 40, das heißt, zu dem Kopplungselement 30. Aufgrund des kontinuierlichen Luftstroms aus dem Innenraum I in die Umgebung U kann keine Flüssigkeit und/oder Schmutzpartikel durch den Spalt 42 in das Gehäuse 7 eindringen. Bei Druckverlust legt sich die Dichtlippe 46 jedoch wieder an und verschließt den Spalt 42 somit.

Die Reinigungswirkung der Schleuderscheibe 8 wird somit durch die rotierende Bewegung derselben erreicht. Durch die Fliehkräfte auf oder nahe der Außenseite 23 der Schleuderscheibe 8 werden Flüssigkeitstropfen und Verunreinigungen in der Radialrichtung R nach außen geschleudert. Es ist kein Wischer oder dergleichen zum Abstreifen von Flüssigkeit und/oder Schmutzpartikeln erforderlich. Dadurch, dass die Antriebseinrichtung 27 die Schleuderscheibe 8 nicht mittig an der Drehachse D antreibt, sondern über das rohrförmige Kopplungselement 30, wird der Sichtbereich 29 der Schleuderscheibe 8 freigehalten. Hierdurch ist eine ungehinderte Durchsicht durch die Schleuderscheibe 8 möglich.

Es ergibt sich ein kompakter koaxialer Aufbau des Kopplungselements 30 und der Antriebseinrichtung 27. Der Antrieb der Schleuderscheibe 8 erfolgt direkt, das heißt, nicht mit Hilfe eines Getriebes, am einem gesamten Außenumfang des Kopplungselements 30, insbesondere der Wandung 31. Vorzugsweise umfasst die Antriebseinrichtung 27 hierzu das Antriebselement 47 in Form bürstenlosen Induktionsmotors. Die Lagerung des Kopplungselements 30 erfolgt ebenfalls an dessen Außenumfang vorzugsweise reibungsfrei, beispielsweise mit Hilfe eines Magnetlagers. Idealerweise handelt es sich dabei gleichzeitig um das Motorlager.

Die Abdichtung in Richtung der Umgebung U erfolgt zuverlässig mit Hilfe der Labyrinthdichtung 39. Alternativ kann auch eine berührende Dichtung, beispielsweise in Form einer Lippendichtung oder eines Simmerrings, eingesetzt werden. Das Eindringen von Flüssigkeit und/oder Schmutzpartikel durch die Labyrinthdichtung 39 wird durch die Druckbeaufschlagung des Spalts 42 von dem Innenraum I her verhindert. Hierzu kann der Verdichter 49 eingesetzt werden.

Alternativ kann die Druckbeaufschlagung auch extern über den Anschlussstutzen 16 erfolgen.

Obwohl die vorliegende Erfindung anhand von Ausführungsbeispielen beschrieben wurde, ist sie vielfältig modifizierbar.

### BEZUGSZEICHENLISTE

- 1: Vorrichtung
- 2: Einrichtung
- 3: Objektiv
- 4: Kameragehäuse
- 5: Linse
- 6: Gehäuseanordnung
- 7: Gehäuse
- 8: Schleuderscheibe
- 9: Vorderwand
- 10: Rückwand
- 11: Seitenwand
- 12: Seitenwand
- 13: Boden
- 14: Halter
- 15: Halter
- 16: Anschlussstutzen
- 17: Kabeldurchführung
- 18: Oberkante
- 19: Bohrung
- 20: Abschnitt
- 21: Abschnitt
- 22: Abschnitt
- 23: Außenseite
- 24: Innenseite
- 25: Beschichtung
- 26: Beschichtung
- 27: Antriebseinrichtung
- 28: Randbereich
- 29: Sichtbereich
- 30: Kopplungselement
- 31: Wandung
- 32: Befestigungsabschnitt
- 33: Stirnfläche
- 34: Vorderseite
- 35: Rückseite
- 36: Absatz
- 37: Absatz
- 38: Dichteinrichtung
- 39: Labyrinthdichtung
- 40: Dichtelement
- 41: Dichtelement
- 42: Spalt
- 43: Aufnahmering
- 44: Dichtelement
- 45: Befestigungselement
- 46: Dichtlippe
- 47: Antriebselement
- 48: Lagerelement
- 49: Verdichter
- 50: Verdichterschaufel
- 51: Befestigungsabschnitt
- 52: Blendenelement
- 53: Waschdüse
- 54: Flächenheizungselement
- 55: Wirbelstromheizungselement
- 56: Heizeinrichtung
- 57: Befestigungsabschnitt
- 58: Wandabschnitt
- 59: Bodenabschnitt

- D: Drehachse
- DM: Drehmoment
- I: Innenraum
- M1: Symmetrieachse
- M2: Symmetrieachse
- R: Radialrichtung
- U: Umgebung

## Patentansprüche

1. Gehäuseanordnung (6) für eine erfassende und/oder emittierende Einrichtung (2), mit:
einem Gehäuse (7) für die Einrichtung (2),
einer in dem Gehäuse (7) um eine Drehachse (D) drehbar gelagerten Schleuderscheibe (8),
einer Antriebseinrichtung (27) zum Antreiben der Schleuderscheibe (8), und
einem in dem Gehäuse (7) um die Drehachse (D) drehbar gelagerten rohrförmigen Kopplungselement (30) zum Koppeln der Antriebseinrichtung (27) mit der Schleuderscheibe (8),
wobei das Kopplungselement (30) an einem Randbereich (28) der Schleuderscheibe (8) fest mit dieser verbunden ist, wobei die Antriebseinrichtung (27) dazu eingerichtet ist, das Kopplungselement (30) unmittelbar anzutreiben, **dadurch gekennzeichnet, dass** das Kopplungselement (30) innerhalb der Antriebseinrichtung (27) angeordnet ist.

2. Gehäuseanordnung nach Anspruch 1,
wobei die Schleuderscheibe (8), das Kopplungselement (30) und die Antriebseinrichtung (27) koaxial angeordnet sind.

3. Gehäuseanordnung nach Anspruch 1 oder 2,
wobei die Schleuderscheibe (8) plan oder topfförmig ist.

4. Gehäuseanordnung nach einem der Ansprüche 1 - 3,
wobei die Antriebseinrichtung (27) ein Antriebselement (47), insbesondere einen bürstenlosen Induktionsmotor, aufweist.

5. Gehäuseanordnung nach Anspruch 4,
wobei das Kopplungselement (30) ein Rotor des Antriebselements (47) ist.

6. Gehäuseanordnung nach Anspruch 4 oder 5,
wobei die Antriebseinrichtung (27) ein Lagerelement (48) zum Lagern des Antriebselements (47), der Schleuderscheibe (8) und des Kopplungselements (30) in dem Gehäuse (7) aufweist.

7. Gehäuseanordnung nach einem der Ansprüche 1 - 6,
mit einer Dichteinrichtung (38) zum umfänglichen Abdichten des Kopplungselements (30) gegenüber dem Gehäuse (7).

8. Gehäuseanordnung nach Anspruch 7,
wobei die Dichteinrichtung (38) eine Labyrinthdichtung (39) und eine Dichtlippe (46) zum Abdichten eines Spalts (42) der Labyrinthdichtung (39) aufweist.

9. Gehäuseanordnung nach Anspruch 7 oder 8,
mit einem Verdichter (49) zum Druckbeaufschlagen der Dichteinrichtung (38).

10. Gehäuseanordnung nach einem der Ansprüche 1 - 9,
wobei die Schleuderscheibe (8) außenseitig eine hydrophobe oder hydrophile Beschichtung (25) und/oder innenseitig eine elektromagnetisch abschirmende und/oder antireflektierende Beschichtung (26) aufweist.

11. Gehäuseanordnung nach einem der Ansprüche 1 - 10,
mit einer Heizeinrichtung (56) zum Beheizen des Gehäuses (7) und/oder der Schleuderscheibe (8).

12. Gehäuseanordnung nach Anspruch 11,
wobei die Heizeinrichtung (56) an dem Gehäuse (7) vorgesehene Flächenheizungselemente (54) und/oder ein in oder an dem Kopplungselement (30) vorgesehenes Wirbelstromheizungselement (55) aufweist.

13. Erfassende und/oder emittierende Vorrichtung (1) mit:
einer Gehäuseanordnung (6) nach einem der Ansprüche 1 - 12, und
einer erfassenden und/oder emittierenden Einrichtung (2).

## Claims

1. A housing arrangement (6) for a capturing and/or emitting mechanism (2), comprising:
a housing (7) for the mechanism (2),
a centrifugal screen (8) that is supported rotatable around a rotation axis (D) in the housing (7),
a driving mechanism (27) for driving the centrifugal screen (8), and
a tube-shaped coupling element (30) that is supported rotatable around the rotation axis (D) in the housing (7) for coupling the driving mechanism (27) to the centrifugal screen (8),
wherein the coupling element (30) is firmly connected to the centrifugal screen (8) at a boundary area (28) thereof, wherein the driving mechanism (27) is configured to drive the coupling element (30) directly,
**characterized in that** the coupling element (30) is arranged inside the driving mechanism (27).

2. The housing arrangement according to claim 1, wherein the centrifugal screen (8), the coupling element (30) and the driving mechanism (27) are arranged coaxially.

3. The housing arrangement according to claim 1 or 2, wherein the centrifugal screen (8) is flat or pot-shaped.

4. The housing arrangement according to one of claims 1 to 3, wherein the driving mechanism (27) comprises a driving element (47), in particular a brushless induction motor.

5. The housing arrangement according to claim 4, wherein the coupling element (30) is a rotor of the driving element (47).

6. The housing arrangement according to claim 4 or 5, wherein the driving mechanism (27) comprises a bearing element (48) for bearing the driving element (47), the centrifugal screen (8) and the coupling element (30) in the housing (7).

7. The housing arrangement according to one of claims 1 to 6, comprising a sealing mechanism (38) for circumferentially sealing the coupling element (30) against the housing (7).

8. The housing arrangement according to claim 7, wherein the sealing mechanism (38) comprises a labyrinth seal (39) and a sealing lip (46) for sealing a gap (42) of the labyrinth seal (39).

9. The housing arrangement according to claim 7 or 8, comprising a compressor (49) for pressurizing the sealing mechanism (38).

10. The housing arrangement according to one of claims 1 to 9, wherein the centrifugal screen (8) comprises a hydrophobic or hydrophilic coating (25) on its outer side and/or an electromagnetic shielding and/or antireflective coating (26) on its inner side.

11. The housing arrangement according to one of claims 1 to 10, comprising a heating mechanism (56) for heating the housing (7) and/or the centrifugal screen (8).

12. The housing arrangement according to claim 11, wherein the heating mechanism (56) comprises panel heating elements (54) that are provided at the housing (7) and/or an eddy current heating element (55) that is provided at the coupling element (30).

13. A capturing and/or emitting device (1), comprising:
a housing arrangement according to one of claims 1 to 12, and
a capturing and/or emitting mechanism (2).

## Revendications

1. Dispositif de logement (6) pour un mécanisme de capture et/ou d'émission (2), comprenant :
un logement (7) pour le mécanisme (2),
un écran centrifuge (8) qui est supporté rotatif autour d'un axe de rotation (D) dans le logement (7),
un mécanisme d'entraînement (27) pour entraîner l'écran centrifuge (8), et
un élément de couplage (30) en forme de tube qui est supporté rotatif autour de l'axe de rotation (D) dans le logement (7) pour coupler le mécanisme d'entraînement (27) à l'écran centrifuge (8),
dans lequel l'élément de couplage (30) est fermement relié à l'écran centrifuge (8) au niveau d'une zone limite (28) de celui-ci, dans lequel le mécanisme d'entraînement (27) est configuré pour entraîner directement l'élément de couplage (30),
**caractérisé par le fait que** l'élément de couplage (30) est disposé à l'intérieur du mécanisme d'entraînement (27).

2. Le dispositif de logement selon la revendication 1, dans lequel l'écran centrifuge (8), l'élément de couplage (30) et le mécanisme d'entraînement (27) sont disposés de manière coaxiale.

3. Le dispositif de logement selon la revendication 1 ou 2, dans lequel l'écran centrifuge (8) est plat ou en forme de pot.

4. Le dispositif de logement selon l'une des revendications 1 à 3, dans lequel le mécanisme d'entraînement (27) comprend un élément d'entraînement (47), en particulier un moteur à induction sans balais.

5. Le dispositif de logement selon la revendication 4, dans lequel l'élément de couplage (30) est un rotor de l'élément d'entraînement (47).

6. Le dispositif de logement selon la revendication 4 ou 5, dans lequel le mécanisme d'entraînement (27) comprend un élément de support (48) pour supporter l'élément d'entraînement (47), l'écran centrifuge (8) et l'élément de couplage (30) dans le logement (7).

7. Le dispositif de logement selon l'une des revendications 1 à 6, comprenant un mécanisme d'étanchéité (38) pour sceller l'élément de couplage (30) sur le pourtour du logement (7).

8. Le dispositif de logement selon la revendication 7, dans lequel le mécanisme d'étanchéité (38) comprend un joint labyrinthe (39) et une lèvre d'étanchéité (46) pour sceller un espace (42) du joint labyrinthe (39).

9. Le dispositif de logement selon la revendication 7 ou 8, comprenant un compresseur (49) pour pressuriser le mécanisme d'étanchéité (38).

10. Le dispositif de logement selon l'une des revendications 1 à 9, dans lequel l'écran centrifuge (8) comprend un revêtement hydrophobe ou hydrophile (25) sur sa face extérieure et/ou un blindage électromagnétique et/ou un revêtement antireflet (26) sur sa face intérieure.

11. Le dispositif de logement selon l'une des revendications 1 à 10, comprenant un mécanisme de chauffage (56) pour chauffer le logement (7) et/ou l'écran centrifuge (8).

12. Le dispositif de logement selon la revendication 11, dans lequel le mécanisme de chauffage (56) comprend des éléments chauffants à panneau (54) qui sont fournis au logement (7) et/ou un élément chauffant à courant de Foucault (55) qui est disposé sur l'élément de couplage (30).

13. Dispositif de capture et/ou d'émission (1), comprenant :
un dispositif de logement selon l'une des revendications 1 à 12, et
un mécanisme de capture et/ou d'émission (2).
